# EUROPÄISCHE PATENTSCHRIFT

(11) **EP 1 222 406 B1**
(45) Veröffentlichungstag und Bekanntmachung des Hinweises auf die Patenterteilung: **01.12.2004**
(21) Anmeldenummer: 00966034.1
(22) Anmeldetag: 16.09.2000
(51) Int. Cl.: F16B 37/04, F16B 37/02, F16B 39/08

(54) **HALTER FÜR KOPFSCHRAUBEN**
RETAINING ELEMENT FOR CAP SCREWS
ELEMENT DE RETENUE POUR VIS A TETE

(30) Priorität: 30.09.1999 DE 19946890
(43) Veröffentlichungstag der Anmeldung: 17.07.2002
(73) Patentinhaber: A. Raymond & Cie, 38028 Grenoble (FR)
(72) Erfinder: DE JONG, Michael, 79589 Binzen (DE)
(74) Vertreter: Rüttgers, Joachim, Dr.
(86) Internationale Anmeldenummer: PCT/EP2000/009060
(87) Internationale Veröffentlichungsnummer: WO 2002/029262

(56) Entgegenhaltungen:
- US-A- 2 336 319
- US-A- 2 381 936
- US-A- 2 748 906
- US-A- 3 217 772
- US-A- 5 951 223

## Beschreibung

Die Erfindung betrifft ein Halteelement zur unverlierbaren Halterung von Kopfschrauben, die mit ihrem Schaft im Loch einer Halteplatte eingelagert sind. Diese Halteplatte ist üblicherweise mit einem Befestigungselement einstückig verbunden, welches mittels der Schraube auf einer Trägerplatte befestigt werden soll.

Aus US - A - 2 748 906 ist bereits ein derartiges Halteelement bekannt, und zwar zur Halterung von Mehrkant-Kopfschrauben, wobei ein an der Halteplatte angeformter Schenkel parallel zur Schraubenachse hochgebogen und oberhalb des Schraubenkopfes zwei weitere Schenkel parallel zur Halteplatte zurückgebogen sind. Dieses Halteelement ist zur unverlierbaren Halterung von Schrauben weder vorgesehen noch geeignet, da es allein dem Zweck dient, den Schraubenschaft im Loch einer Trägerplatte durch seitliches Überschieben des Halteelements über den Schraubenkopf zu sichern, nachdem der Schaft zuvor in das Befestigungsloch der Trägerplatte eingeführt worden ist.

Aufgabe der Erfindung ist es, das Halteelement so auszubilden, daß die Kopfschraube von diesem sowohl verdrehbar als auch unverlierbar gehalten wird und zwar derart, daß sich das Halteelement beim Aufsetzen auf eine Trägerplatte mittels der bereitgehaltenen Schraube in dem vorgesehenen Montageloch schnell und einfach festschrauben läßt.

Diese Aufgabe wird nach der vorliegenden Erfindung dadurch gelöst, daß der zurückgebogene Schenkel von der Halteplatte einen Abstand hat, der um mindestens eine Gewindesteigung kleiner ist als die Gesamtlänge der Zylinderkopfschraube. Durch die erfindungsgemäße Ausbildung des Halteelements wird gewährleistet, daß die einmal eingelegte Schraube mit ihrem Schaft nicht aus dem Loch der Halteplatte heraustreten kann und dadurch stets in eindrehbereiter Lage gehalten wird. Außerdem kann die Kopfschraube bis zur Anlage am oberen Schenkel problemlos zurückweichen, wodurch der Gewindeschaft im Anlieferungszustand des Halteelements solange versenkt bleiben kann, bis er am Einsatzort die Position über dem Befestigungsloch erreicht hat und in das Loch hineinfallen kann.

Dieses Halteelement ist zwar grundsätzlich auch zur unverlierbaren Halterung von Sechskant-Kopfschrauben geeignet; es wird aber vorzugsweise zur Halterung von Zylinderkopfschrauben verwendet, wobei dann in dem über den Schraubenkopf zurückgebogenem Schenkel in axialer Verlängerung des Zylinderkopfes eine entsprechende Aussparung zum Einführen eines Schraubendrehers erforderlich ist. Diese Ausführungsform bietet den Vorteil, daß die Schraube mit einem passenden Schraubendreher ohne Arbeitsunterbrechung in einem Durchgang eingedreht werden kann, während bei der Sechskantschraube der von außen angreifende Maulschlüssel wegen des hinderlichen Schenkels nach einer kleinen Drehung immer wieder neu angesetzt werden muß.

Durch die Ausbildung der Haltelappen nach Anspruch 2 und insbesondere nach Anspruch 3 wird ferner eine gute axiale Führung des Zylinderkopfes im Halteelement erreicht, so daß der Schraubenschaft beim Eindrehen der Schraube gleich die richtige Lage und axiale Ausrichtung zu dem darunter befindlichen Gewinde der zur Verschraubung vorgesehenen Mutter besitzt.

Die Merkmale und Ausgestaltungen der Erfindung sollen nachfolgend mit ihren Vorteilen anhand von zwei in der Zeichnung dargestellten Ausführungsbeispielen näher beschrieben werden. Es zeigen
- **Fig. 1**: ein Halteelement für Zylinderkopfschrauben mit Befestigungselement und eingelagerter Zylinderkopfschraube in Seitenansicht,
- **Fig. 2**: das gleiche Halteelement in Vorderansicht,
- **Fig. 3**: das gleiche Halteelement in Draufsicht,
- **Fig. 4**: das gleiche Halteelement in perspektivischer Darstellung,
- **Fig. 5**: das gleiche Halteelement im Schnitt gemäß Linie V - V in Fig.3 im aufmontierten Zustand und
- **Fig. 6**: ein zweites Halteelement im Schnitt mit einem anderen Befestigungselement und eingelagerter Sechskantschraube im aufmontierten Zustand.

Das in den Figuren dargestellte Halteelement für Kopfschrauben wird üblicherweise zur Befestigung von Bau- oder Funktionselementen auf Trägerplatten verwendet, wozu eine Halteplatte 1 mit einem geeigneten Befestigungselement starr verbunden und mit einem Loch **3** zum Einführen des Schaftes **5** der Kopfschraube **4** versehen ist.

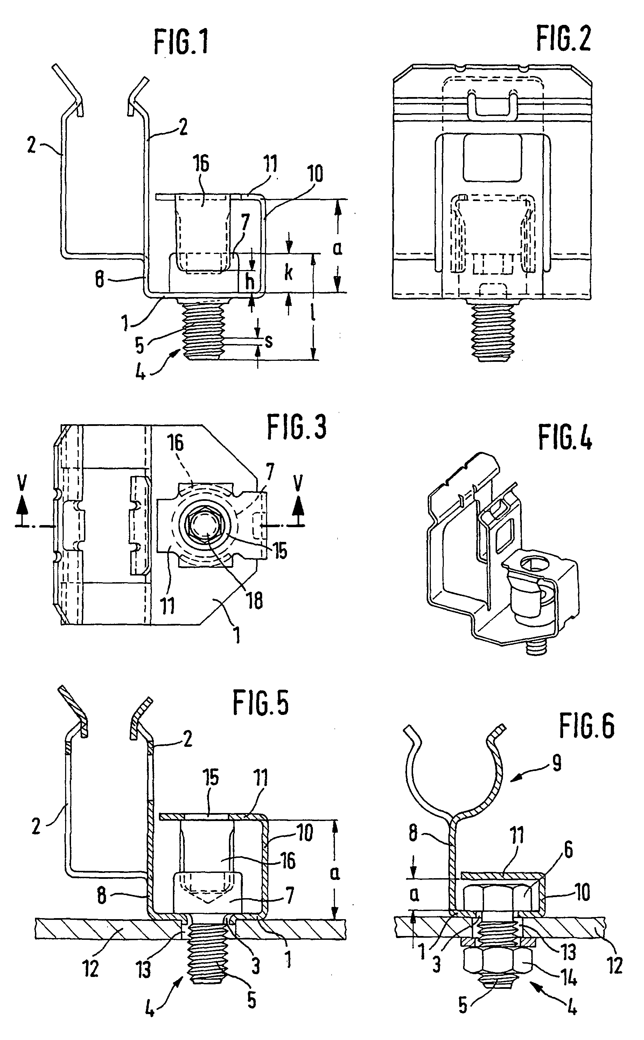

Bei dem in **Figur 6** dargestellten, allgemeinen Ausführungsbeispiel der Erfindung ist an der Halteplatte **1** auf der einen Seite des Loches **3** ein Steg **8** mit einer Schelle **9** angeformt, welche zur klemmenden Halterung von Rohr- oder Kabelleitungen bestimmt ist.

Auf der anderen Seite des Loches **3** ist ein Schenkel **10** angeformt und parallel zur Achse der im Loch **3** der Halteplatte **1** einzulagernden Schraube **4** hochgebogen. An diesem Schenkel **10** ist dicht oberhalb des eingelegten Schraubenkopfes **6** ein weiterer Schenkel **11** angeformt und parallel zur Halteplatte **1** zurückgebogen. Das komplette Befestigungselement mit der Halteplatte **1** und der im Loch **3** eingelagerten Kopfschraube **4** kann nun mittels einer Mutter **14** auf einer Trägerplatte **12** fest verschraubt werden, die mit einem entsprechenden Befestigungsloch **13** zur Aufnahme des Schraubenschaftes **5** versehen ist.

Bei dem in den **Figuren 1** bis **5** gezeigten, bevorzugten Ausführungsbeispiel der Erfindung zur Halterung von Zylinderkopfschrauben ist die Halteplatte **1**, genau wie bei Figur 6, auf der einen Seite über einen Steg **8** mit zwei Klemmschenkeln **2** verbunden, welche zur Aufnahme eines im Querschnitt rechteckigen Bauteils wie bsp. eines Kabelkanals ausgebildet sind. Auf der gegenüberliegenden Seite ist die Halteplatte **1** mit einem angewinkelten Schenkel **10** und einem über den Zylinderkopf **7** zurückgebogenen Schenkel **11** versehen, wobei im letzteren Schenkel **11** eine Aussparung **15** in axialer Verlängerung des Zylinderkopfes **7** zum Einführen eines Schraubendrehers in das Eingriffsloch **18** des Zylinderkopfes **7** vorgesehen ist. Das Eingriffsloch **18** kann hierbei aus einem innensechskant bestehen oder sonst ein geeignetes Kraftübertragungsprofil aufweisen.

Der zurückgebogene Schenkel **11** hat hierbei von der Halteplatte **1** aus einen Abstand **"a",** der mindestens um die Gewindesteigung **"s**" des Schaftes **5** kleiner ist als die Gesamtlänge **"I**" der Kopfschraube **4.** Außerdem sind an diesem Schenkel **11** beiderseits des Schraubenkopfes **7** zwei Haltelappen **16** angeformt und parallel zur Zylinderwand **17** des Schraubenkopfes **7** umgebogen. Die Haltelappen **16** enden hierbei in einer Höhe **"h**" über der Halteplatte **1,** die mindestens etwas kleiner sein muß als die Höhe **"k**" des Zylinderkopfes **7.** Zur besseren Führung des Zylinderkopfes **7** sind die Haltelappen **16** zweckmäßigerweise konzentrisch zur Wand **17** des Zylinderkopfes **7** geformt.

### Bezugszeichenliste

- 1: Halteplatte
- 2: Befestigungselement
- 3: Loch
- 4: Kopfschraube
- 5: Schaft
- 6: Sechskantkopf
- 7: Zylinderkopf
- 8: Steg
- 9: Schelle
- 10: Schenkel
- 11: Schenkel
- 12: Trägerplatte
- 13: Befestigungsloch
- 14: Mutter
- 15: Aussparung
- 16: Haltelappen
- 17: Zylinderwand
- 18: Eingriffsloch

## Patentansprüche

1. Vorrichtung zum Befestigen von wenigsten einem Element an einer Trägerplatte mit einer einen Schaft (5) sowie einen Kopf (6, 7) aufweisenden Kopfschraube (4) und mit einem Halteelement zur unverlierbaren Halterung der Kopfschraube (4), wobei das Halteelement eine über ein Loch (3) zur drehbaren Aufnahme des Schaftes (5) der Kopfschraube (4) verfügende Halteplatte (1), einen an der Halteplatte (1) angeformten Schenkel (10), der rechtwinklig zu Halteplatte (1) hochgebogen ist, und einen weiteren Schenkel (11) aufweist, der in einem Abstand von der Halteplatte (1) parallel zu der Halteplatte (1) zurückgebogen ist, **dadurch gekennzeichnet, dass** der weitere zurückgebogene Schenkel (11) von der Halteplatte (1) einen Abstand (a) hat, der um mindestens eine Gewindesteigung (s) kleiner als die Gesamtlänge (I) der Kopfschraube (4) ist.

2. Vorrichtung nach Anspruch 1, **dadurch gekennzeichnet, dass** an dem weiteren zurückgebogenen Schenkel (11) beidseitig zwei Haltelappen (16) angeformt und zur Halteplatte (1) weisend rechtwinklig umgebogen sind, wobei die Haltelappen (16) von der Halteplatte (1) in einer Höhe (h) enden, die etwas kleiner als die Höhe (k) des Kopfes (7) der Kopfschraube (4) ist.

3. Vorrichtung nach Anspruch 2, **dadurch gekennzeichnet, dass** die Haltelappen (16) konzentrisch zum Loch (3) geformt sind.

## Claims

1. Device for fastening at least one element to a support plate with a headed screw (4) having a shaft (5) and a head (6, 7) and with a retaining element for captive holding of the headed screw (4), whereby the retaining element has a holding plate (1) having a hole (3) for rotatable accommodation of the shaft (5) of the headed screw (4), a limb (10) formed on the holding plate (1), said limb being bent up perpendicular to the holding plate (1), and a further limb (11), which is bent back at a separation from the holding plate (1) parallel to the holding plate (1), **characterised in that** the further bent back limb (11) is at a separation (a) from the holding plate (1), said separation being at least on thread pitch (s) smaller than the overall length (1) of the headed screw (4).

2. Device according to claim 1, **characterised in that** on the further bent-back limb (11) two holding lugs (16) are formed, one on each side, bend down at a right angle towards the holding plate (1), whereby the holding lugs (16) end at a height (h) from the holding plate (1) that is somewhat smaller than the height (k) of the head (7) of the headed screw (4).

3. Device according to claim 2, **characterised in that** the holding lugs (16) are formed concentric with the hole (3).

## Revendications

1. Dispositif pour la fixation d'au moins un élément sur une plaque support comprenant une vis à tête (4) se composant d'une tige (5) ainsi que d'une tête (6, 7) et d'un élément de retenue pour le maintien en position de la vis à tête (4) de manière imperdable, l'élément de retenue comportant en l'occurrence une plaque de retenue (1) munie d'un trou (3) pour l'insertion, par un mouvement de rotation, de la tige (5) de la vis à tête (4), une patte (10) réalisée solidaire par formage de la plaque de retenue (1) qui est repliée vers le haut selon une orientation en angle droit par rapport à la plaque de retenue (1) et une autre patte (11) qui est repliée vers l'arrière, à une certaine distance de la plaque de retenue (1) selon une orientation parallèle au plan de la plaque de retenue (1), **caractérisé en ce que** l'autre patte (11) repliée vers l'arrière se trouve à une distance (a) de la plaque de retenue (1) qui est plus petite, dans la proportion d'au moins un filet (s) de la vis, que la longueur totale (1) de la vis à tête (4).

2. Dispositif selon la revendication 1, **caractérisé en ce que** deux languettes de retenue (16) sont réalisées solidaires par formage de part et d'autre de l'autre patte repliée vers l'arrière (11) et sont repliées en angle droit en direction de la plaque de retenue (1), les languettes de retenue (16) se terminant à une hauteur (h) de la plaque de retenue (1) qui est légèrement plus réduite que la hauteur (k) de la tête (7) de la vis à tête (4).

3. Dispositif selon la revendication 2, **caractérisé en ce que** les languettes de retenue (16) sont formées selon une disposition concentrique par rapport au trou (3).
